# EUROPÄISCHE PATENTSCHRIFT

(11) **EP 2 392 415 B1**
(45) Veröffentlichungstag und Bekanntmachung des Hinweises auf die Patenterteilung: **27.11.2013**
(21) Anmeldenummer: 11163145.3
(22) Anmeldetag: 20.04.2011
(51) Int. Cl.: B08B 9/42, B65G 21/08, B65G 19/28, B65G 19/30

(54) **Reinigungsanlage**
Cleaning assembly
Installation de nettoyage

(30) Priorität: 02.06.2010 DE 102010029641
(43) Veröffentlichungstag der Anmeldung: 07.12.2011
(73) Patentinhaber: Krones AG, 93073 Neutraubling (DE)
(72) Erfinder: Hansen, Bernd, 25873, Rantrum (DE)
(74) Vertreter: Grünecker, Kinkeldey, Stockmair & Schwanhäusser

(56) Entgegenhaltungen:
- DE-A1- 2 030 452
- DE-A1- 2 620 434
- DE-A1- 3 151 059
- DE-A1- 3 436 089
- GB-A- 191 125 092

## Beschreibung

Die Erfindung betrifft eine Reinigungsanlage der im Oberbegriff des Patentanspruchs 1 angegebenen Art.

In konventionellen Reinigungsanlagen, insbesondere für Glas- und/oder Kunststoff-Flaschen, werden die Flaschen beispielsweise in Querreihen in Flaschenträger eingeschoben, wobei die Flaschenträger hintereinander an wenigstens einer umlaufenden Transportkette befestigt sind. Beispielsweise werden nebeneinander bis zu 74 Flaschen oder mehr in aufeinanderfolgenden Querreihen in relativ dichter Anordnung durch unterschiedliche Zonen in der Reinigungsanlage gefördert, und zwar entlang teils bogenförmiger Bahnen. Selbst wenn die Flaschen in den Flaschenträgern gehalten sind, entsteht durch Kontakt beispielsweise des Flaschenbodens mit der Kontaktoberseite der Blechwand gegenseitiger Verschleiß. Insbesondere in wenigstens einer kuppenförmigen Umlenkzone entlang des Flaschentransportwegs zeigt sich in den Flaschenpfaden ein markanter Verschleißbereich, da jede Flasche im Flaschenträger bei der Umlenkung eine Kippbewegung ausführt und lokal konzentriert mit dem Flaschenboden auf der Flaschenkontaktseite schräg gestellt wird. Der lokale Verschleiß wird umso stärker, desto mehr Schmutz und Sand in die Reinigungsanlage eingetragen wurden. Da jede Flasche in der Umlenkzone praktisch an derselben Stelle kippt, entsteht mit der Zeit an dieser Stelle eine markante, deutlich sichtbare und fühlbare Kerbung in der Flaschenkontaktseite der Blechwand. Dabei hat die Beschaffenheit des Flaschenbodens erheblichen Einfluss auf das Verschleißverhalten. Ist an der Blechwand der Materialabtrag weit vorangeschritten, nehmen auch Beschädigungen der Flaschen zu. Bei Glasflaschen verstärkt der Glasbruch die allmähliche Zerstörung der Blechwand weiter. Die Reinigungsanlage bedarf dann einer Reparatur. Dazu wird die Blechwand zur Gänze herausgetrennt, beispielsweise in Sektionen, und wird eine neue Blechwand oder werden neue Blechsektionen eingeschweißt. Diese Reparatur kann nur von speziell ausgebildeten Gehäusebauspezialisten durchgeführt werden und bedingt eine lange Totzeit der Reinigungsanlage.

Aus DE 26 20 434 A ist eine Flaschenreinigungsmaschine bekannt, bei der auf der Blechwand entweder ein quer zur Transportrichtung durchgehendes Federblech oder quer zur Transportrichtung beabstandete einzelne, sich in Transportrichtung erstreckende Federbleche verschraubt sind, auf die Flaschen beim Austritt aus den Flaschenzellen mit dem Flaschenboden auftreffen. Das jeweilige Federblech kontaktiert die Blechwand mit einem freien Ende und ist am in Transportrichtung hintenliegenden Ende verschraubt. Durch die Auftreffbewegungen der Flaschen wird das Federblech verformt, wobei es sich mit seinem freien Ende in die Blechwand eingräbt und dort lokalen Verschleiß erzeugt, der entweder die Federungsfunktion mit der Zeit beeinträchtigt oder aufwändige Reparaturarbeiten der Blechwand erfordert.

Aus DE 2 030 452 A ist eine Flaschenreinigungsmaschine bekannt, bei der vor einem Abgabebereich D2 quer zur Transportrichtung orientierte, konkave Gleitbleche beweglich angeordnet sind, auf denen die aus den Flaschenzellen austretenden Flaschen gleiten. Verschlissene Gleitbleche können ausgetauscht werden. Die Gleitbleche definieren im Abgabebereich die Begrenzung des Transportweges der Flaschen aus der Flaschenreinigungsmaschine.

Aus DE 34 36 089 A ist eine Transportvorrichtung für aufrechtstehende Flaschen bekannt, die in einem bogenförmigen Umlenkbereich von den Böden der Flaschen kontaktierte Gleitelemente aus verschleißfestem Hartstoff aufweist. Die Gleitelemente sind in bogenförmigen Stützschienen durch Einkleben oder Vergießen festgelegt, so dass bei Verschleiß von Gleitelementen jeweils auch eine Stützschiene ausgewechselt werden muss.

Aus GB 25 092 A ist eine Flaschenreinigungsmaschine bekannt, deren halbzylinderförmiger Blechtrog mit einer Auskleidung versehen ist, die aus einzelnen, sich entlang des gesamten Transportweges erstreckenden, quer zur Transportrichtung beabstandeten, parallelen Blechstreifen besteht. Die Blechwand des Trogs wird von den Flaschen nicht kontaktiert.

Der Erfindung liegt die Aufgabe zugrunde, eine Reinigungsanlage der eingangs genannten Art zu schaffen, in der verschleißbedingte Reparaturen einfach und rascher durchführbar sind.

Die gestellte Aufgabe wird mit den Merkmalen des Patentanspruchs 1 gelöst.

Da in dem Verschleißbereich das zumindest eine austauschbar angeordnete Schleißblech vorgesehen ist, lässt sich eine Reparatur einfach und rasch nur durch Austausch des verschlissenen Schleißblechs durchführen. Die Blechwand kann jeweils zumindest eine auf die Schleißblechstärke abgestimmte, lokale Vertiefung zum bündigen Einsetzen zumindest eines Schleißblechs aufweisen. Die Blechwand kann dabei ein Blechkantteil sein. Die in der Vertiefung montierte Schleißwand vermeidet störende Übergänge bei der Förderung der Flaschen über die Verschleißbereiche. Alternativ ist ein z.B. hinterseitig umrahmter Ausschnitt in der Blechwand vorgesehen, in welchem sich mit unrotiertem Schleißblech sogar eine gegebenenfalls erforderliche Abdichtung herstellen lässt. Die Reparatur kann problemlos selbst von Ungeschulten durchgeführt werden und bedingt nur eine kurze Totzeit für die Reinigungsanlage. Da die Reparatur einfach und rasch durchführbar ist, kann sie früher als bisher durchgeführt werden, um Schäden an den Flaschen zu minimieren, die dadurch im Mehrwegprinzip öfters zirkulieren können. Dies reduziert bei der Mehrweg-Zirkulation auch den Einsatz neuer Flaschen.

In einer zweckmäßigen Ausführungsform ist das Schleißblech im Verschleißbereich durch Schrauben austauschbar fixiert. Es brauchen zur Reparatur nur die Schrauben gelöst und nach Austausch des Schleißblechs gegen ein Neues wieder angezogen zu werden. Dafür ist nicht nur relativ ungeschultes Personal einsetzbar, sondern fällt nur eine wünschenswert kurze Totzeit der Reinigungsanlage an.

Das jeweilige Schleißblech könnte alternativ oder additiv zur Verschraubung eingeklinkt oder mittels lösbarer Verriegelungen fixiert sein.

Zwecks einfacherer Handhabung und, da der Verschleiß in Querrichtung des Verschleißbereiches, das heißt quer zur Flaschentransportrichtung, variieren kann, ist es zweckmäßig, wenn im Verschleißbereich mehrere einzeln austauschbare Schleißbleche nebeneinanderliegend, vorzugsweise stumpf aneinanderstoßend, vorgesehen sind. Dies ermöglicht es, nur ein besonders stark verschlissenes Schleißblech auszutauschen, und andere im Verschleißbereich weiterhin zu verwenden. Alternativ könnte zwischen zwei Schleißblechen ein zum Beispiel streifenförmiger Zwischenraum vorgesehen sein, der, vorzugsweise auf eine Lücke zwischen Flaschenpfaden ausgerichtet ist, in der ohne kaum Verschleiß auftritt. Selbst wenn bei einer Reparatur alle Schleißbleche im Verschleißbereich ausgewechselt werden, vereinfacht die Unterteilung in mehrere Schleißbleche die Handhabung bei der Reparatur. Ähnlich könnte im Verschleißbereich mehr als nur ein Schleißblech in Flaschentransportrichtung austauschbar angeordnet sein. Es wäre alternativ möglich in jedem in der Reinigungsanlage definierten Flaschenpfad ein separates Schleißblech einzeln austauschbar anzubringen.

In einer zweckmäßigen Ausführungsform ist jedes Schleißblech ein Blechstreifen mit rechteckigem oder quadratischem Außenumriss. Schraublöcher für die Schrauben sind zweckmäßig entlang des Außenumrisses des Blechstreifens platziert. Durch eine Vielzahl entlang des Außenumrisses verteilter Schraublöcher ergibt sich ein fester Schluss des montierten Schleißblechs im Verschleißbereich. Dies soll jedoch nicht ausschließen, den Schleißblechen, gegebenenfalls angepasst an die Verhältnisse im Verschleißbereich, Umrissformen zu geben, die von einem Rechteck oder Quadrat abweichen, zum Beispiel eine ovale Form oder eine rechteckige Form mit wellenförmigen Rändern, oder dergleichen. Zweckmäßig werden die Schrauben zwecks einfacherer Reparatur-Handhabung von der Flaschenkontaktseite her in das Schleißblech ein und mit einer darunterliegenden Halterung zum Beispiel der Blechwand selbst, verschraubt. Alternativ oder additiv könnten die Schrauben auch von der gegenüberliegenden Seite eingebracht werden. In jedem Fall ist es zweckmäßig, die Schrauben bündig mit der Kontaktoberseite zu platzieren, gegebenenfalls etwas versenkt gegenüber der Flaschenkontaktseite. In ähnlicher Weise könnten auch andere Verriegelungen zum Fixieren benutzt werden, zum Bespiel auch welche die nur in der Blechwand oder/und einer Halterung verankert werden.

Bei einer zweckmäßigen Ausführungsform ist das Schleißblech verschleißfester als benachbarte Bereiche der Blechwand, um dem lokal stärkeren Verschleiß im Verschleißbereich Rechnung zu tragen. Beispielsweise bestehen die Schleißbleche aus hochwertigerem Material zum Beispiel einem Blechmaterial, zum Beispiel aus Edelstahl, als die angrenzende Blechwand.

Bei einer anderen Alternative weist das Schleißblech zumindest eine verschleißfestere Flaschenkontaktseite auf, als der dem Schleißblech benachbarte Bereich der Blechwand, zum Beispiel eine Beschichtung, Oberflächenveredelung, oder dergleichen.

In einer Ausführungsform weist der Verschleißbereich der Blechwand in einer bogenförmigen Flaschenumlenkzone des Gehäuses, beispielsweise in einer kuppenförmigen und/oder senkenförmigen Umlenkzone, eine den Flaschen zugewandete konvex oder konkav gekrümmte Flaschenkontaktseite zum Beispiel für Flaschenböden auf. Das Schleißblech, das dort austauschbar angebracht ist, ist ein entsprechend gebogener Blechstreifen gegebenenfalls ein vorgefertigter und dem Nutzer der Reinigungsanlage vom Hersteller mitgelieferter oder ein vor Ort hergestellter Ersatzteil. Damit soll aber nicht ausgeschlossen sein, wenigstens ein Schleißblech in einem zumindest im Wesentlichen ebenen Verschleißbereich vorzusehen, zum Beispiel in einem Abschnitt des Flaschentransportwegs, in welchem lokal starker Verschleiß aus anderen Gründen zu erwarten ist, zum Beispiel in einer Kurve oder dort, wo bei der Reinigung verstärkt abrasive Verschmutzungen anfallen.

Bei einer weiteren Ausführungsform erstreckt sich die Flaschenumlenkzone quer zur Transportrichtung in Querreihen geförderter Flaschen und sind im Verschleißbereich gleich breite Schleißbleche mit quer zur Transportrichtung gleichen oder ungleichen Längen quer zur Transportrichtung hintereinander und einzeln austauschbar angeordnet. Gleiche Längen vereinfachen die Herstellung aufgrund eines Gleichteileprinzips.

Dabei kann es zweckmäßig sein, wenn die in Transportrichtung vorne- und/oder hintenliegenden Schleißblechränder abgeschrägt sind, um glatte Übergänge sicherzustellen.

Schließlich kann es zweckmäßig sein, dass die Flaschen in jeder Querreihe voneinander mit Lücken beabstandet zu fördern, und die Schrauben des austauschbar angeordneten Schleißbleches auf die Lücken zwischen den Flaschen auszurichten. Dadurch werden verschleißbehaftete Kollisionen zwischen den Flaschen und den Schrauben bzw. Schraublöchem vermieden.

Der Erfindungsgegenstand wird anhand der Zeichnung erläutert. Es zeigen:
- Fig. 1: einen Ausschnitt einer Reinigungsanlage für Flaschen in perspektivischer Darstellung, und
- Fig. 2: einen vergrößerten Ausschnitt einer Frontansicht zu Fig. 1.

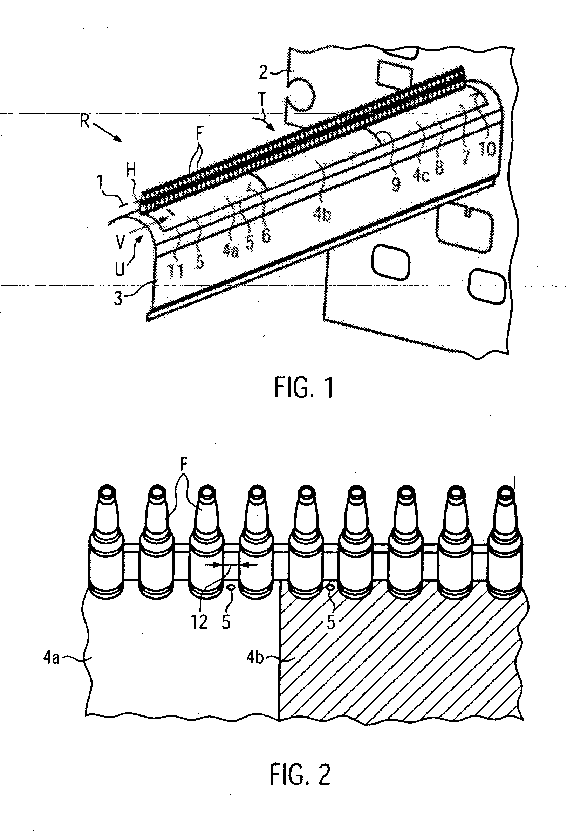

Fig. 1 zeigt in perspektivischer Darstellung einen Abschnitt (eine Anlagenzone) einer Reinigungsanlage R für Flaschen F, insbesondere für Glas- und/oder Kunststoff-Flaschen. Solche Reinigungsanlagen R (Flaschenwaschmaschinen) werden vorwiegend in der Getränkeabfüllindustrie entweder für neu produzierte Flaschen oder für nach dem Mehrwegprinzip zirkulierend eingesetzte, gebrauchte Flaschen verwendet.

Die Reinigungsanlage R weist ein Gehäuse 2 auf, in welchem eine Blechwand 3 eine Begrenzung eines Flaschentransportpfades durch Anlagenzonen der Reinigungsanlage R bildet, beispielsweise, wie gezeigt, in einer Anlagenzone mit einer in Flaschentransportrichtung T kuppenförmigen, das heißt bogenartig konvex gekrümmten Umlenkzone U, deren Kuppenkrone zum Beispiel quer zur Transportrichtung T orientiert ist. Die Flaschen F werden zum Beispiel in Flaschenträgern H angeordnet. Die Flaschenträger H werden von mindestens einem Transportelement 1, zum Beispiel einer Förderkette, in Transportrichtung T durch die Reinigungsanlage 2 gefördert. Im gezeigten Ausführungsbeispiel werden aufeinanderfolgende Querreihen der Flaschen F auch über die Umlenkzone U gefördert. Die Flaschen F können beispielsweise mit ihren Flaschenböden die Blechwand 3 zumindest manchmal kontaktieren, kontaktieren diese aber nachhaltig in der Umlenkzone U, in der somit ein Verschleißbereich V vorliegt, in welchem auf dem Flaschentransportweg lokal starker Verschleiß zu erwarten ist. Bei der Umlenkung in der Umlenkzone U kann nämlich jede Flasche praktisch an derselben Stelle des Verschleißbereiches V eine relative Kippbewegung im Flaschenträger H ausführen, bei der zum Beispiel der Flaschenboden nachhaltig die Flaschenkontaktseite im Verschleißbereich V kontaktiert, so dass an dieser Stelle mit der Zeit markanter Materialabtrag entsteht. Ein derartiger Verschleißbereich V kann auch oder nur in einer konkaven Senke und/oder in einem ebenen Abschnitt, gegebenenfalls sogar nur an einer Stelle oder mehreren nebeneinander oder hintereinander liegenden Stellen zu erwarten sein.

Um eine aufgrund solchen Verschleißes erforderlich werdende Reparatur zu vereinfachen, die Reparaturzeit zu verkürzen und den Material- und Arbeitsaufwand für die Reparatur zu verringern, ist erfindungsgemäß im und/oder im jeweiligen Verschleißbereich V oder an wenigstens einer verschleißkritischen Stelle mindestens ein Schleißblech 4a, 4b, 4c austauschbar angeordnet.

Zweckmäßig sind sogar, wie in Fig. 1 angedeutet, im Wesentlichen über die Breite des Verschleißbereiches V mehrere Schleißbleche 4a, 4b, 4c, vorzugsweise stumpf aneinanderstoßend oder mit streifenförmigen Zwischenabständen zum Beispiel ausgerichtet auf Lücken zwischen gegebenen Flaschenpfaden und einzeln oder gemeinsam austauschbar angebracht. Zum Fixieren jedes Schleißblechs 4a, 4b, 4c können unterschiedliche Befestigungselemente oder Verriegelungen verwendet werden. Zweckmäßig sind die Befestigungselemente Schrauben 5, die in oder durch Schraublöcher 6 der Schleißbleche 4a, 4b, 4c entweder von der Flaschenkontaktseite und/oder von der Gegenseite und in dahinterliegende Transportstrukturen oder die Blechwand 3, oder dort angeordnete oder fixierte Widerlager wie Muttern eingeschraubt sind. Die angezogenen Schrauben 5 sind bündig mit der Flaschenkontaktseite, oder sogar versenkt. Die Schraubbohrungen 6 können glatte Bohrungen oder Gewindebohrungen sein, zum Beispiel falls das Schleißblech von der Hinterseite her durch die Blechwand 3 verschraubt wird. In der in Fig. 1 gezeigten Ausführungsform ist jedes Schleißblech 4a, 4b, 4c auf die Oberseite der Blechwand 3 aufgeschraubt. Jedes Schleißblech 4a, 4b, 4c ist ein beispielsweise rechteckiger (oder quadratischer oder anders geformter) Blechstreifen 7, in der gezeigten Ausführungsform mit in Transportrichtung T vorne- und hintenliegenden Rändern 8 und geraden Seitenrändern 9, 10. Zumindest die vorne- und hintenliegenden Ränder 8 können abgeschrägt sein. Alternativ könnte im Verschleißbereich V eine auf die Schleißblechstärke abgestimmte Vertiefung 11 geformt sein, in die jedes Schleißblech 4a, 4b, 4c bündig eingesetzt ist, um störende Übergänge zu vermeiden. Alternativ oder additiv zu Befestigungselementen kann jedes Schleißblech 4a, 4b, 4c eingeklinkt oder mittels lösbarer Verriegelungen beliebiger Art fixiert sein. Zum Beispiel könnten starke Permanentmagneten als magnetische Verriegelungen dienen oder Saugnäpfe und dergleichen.

Wie Fig. 2 in einer Frontansicht andeutet, können die Flaschen F gegenseitig mit Lücken 12 beabstandet gefördert werden. Zweckmäßig werden die Schrauben 5 auf die Lücken 12 ausgerichtet, um störende oder verschleißbehaftete Kollisionen zum Beispiel für die Flaschenböden, auszuschließen.

Jedes Schleißblech 4a, 4b, 4c kann aus verschleißfesterem Material, insbesondere Blechmaterial, hergestellt sein als dem Schleißblech benachbarte Bereiche der Blechwand 3. Das hochwertigere und gegebenenfalls teure Schleißblech erhöht die Gesamtkosten nur unwesentlich, da es in der Blechwand nur einen relativ kleinen Teilbereich belegt. Alternativ könnte zumindest die Flaschenkontaktseite des Schleißbleches verschleißfester ausgebildet sein, mit einem Belag, einer Beschichtung oder aufgrund einer speziellen Oberflächenbehandlung, als dem Schleißblech benachbarte Bereiche der Blechwand. Der Vorteil der einfachen und kostengünstigen Reparatur ist so kombiniert mit einer höheren Standzeit bzw. niedrigeren Reparaturfrequenz.

Die Anordnung mehrerer gleich großer oder verschieden großer Schleißbleche quer zur oder in Flaschentransportrichtung T resultiert nicht nur in einer Vereinfachung der Handhabung bei einer Reparatur, sondern ermöglicht es auch, nur ein stark verschlissenes Schleißblech auszuwechseln, und andere zunächst zu belassen. Dies soll jedoch nicht ausschließen, ein maximal über die Gesamtbreite der Blechwand durchgehendes Schleißblech austauschbar vorzusehen, oder/und in Transportrichtung mehr als ein Schleißblech im Verschleißbereich V austauschbar anzuordnen.

Vorgefertigte und gegebenenfalls entsprechend passend gebogene Schleißbleche, beispielsweise für mehrere hinsichtlich des Verschleißes kritische Anlagenzonen der Reinigungsanlage, können zweckmäßig am Einsatzort der Reinigungsanlage bevorratet sein, um bei Bedarf zum Beispiel durch Personal des Nutzers der Reinigungsanlage jederzeit Reparaturen durchführen zu können.

## Patentansprüche

1. Reinigungsanlage (R) für Flaschen (F), insbesondere Glas- und/oder Kunststoff-Flaschen, mit einem Gehäuse (2), in welchem wenigstens ein einen Flaschenträger (H) aufweisendes Transportelement (1) die Flaschen (F) durch unterschiedliche Anlagenzonen fördert, wobei im Gehäuse (2) als Begrenzung des Flaschentransportwegs wenigstens eine Blechwand (3) vorgesehen ist, die an einer Flaschen-Kontaktseite von Flaschen zumindest in wenigstens einem lokal begrenzten Verschleißbereich (V) entlang des Flaschentransportwegs kontaktierbar ist, und wobei im Verschleißbereich (V) zumindest ein Schleißblech (4a, 4b, 4c) vorgesehen ist, das im Verschleißbereich (V) die Flaschen-Kontaktseite der Blechwand (3) definiert, **dadurch gekennzeichnet, dass** die Blechwand (3) eine auf die Schleißblechstärke abgestimmte lokale Vertiefung (11) oder einen unterseitig umrahmten Ausschnitt jeweils zum bündigen Einsetzen zumindest eines austauschbar angeordneten Schleißbleches (4a, 4b, 4c) aufweist.

2. Reinigungsanlage nach Anspruch 1, **dadurch gekennzeichnet, dass** das Schleißblech (4a, 4b, 4c) im Verschleißbereich (V) mit Schrauben (5) austauschbar fixiert ist.

3. Reinigungsanlage nach Anspruch 1, **dadurch gekennzeichnet, dass** das Schleißblech (4a, 4b, 4c) im Verschleißbereich (V) eingeklinkt und/oder mit lösbaren Verriegelungen festgelegt ist.

4. Reinigungsanlage nach Anspruch 1, **dadurch gekennzeichnet, dass** im Verschleißbereich (V) mehrere einzeln austauschbare Schleißbleche (4a, 4b, 4c) nebeneinanderliegend, vorzugsweise stumpf aneinanderstoßend oder mit zum Beispiel neben Flaschenpfaden platzierten, Zwischenabständen, vorgesehen sind.

5. Reinigungsanlage nach Anspruch 1, **dadurch gekennzeichnet, dass** das Schleißblech (4a, 4b, 4c) ein Blechstreifen (7) mit rechteckigem oder quadratischem Außenumriss ist, und entlang des Außenumrisses Verankerungsstellen, vorzugsweise Bohrungen oder Gewindebohrungen oder Widerlager, für Schrauben (5) oder Verriegelungen aufweist.

6. Reinigungsanlage nach Anspruch 5, **dadurch gekennzeichnet, dass** die Schrauben (5) oder Verriegelungen von der Flaschenkontaktseite und/oder von der der Flaschenkontaktseite abgewandeten Seite in das Schleißblech (4a, 4b, 4c) und eine dahinterliegende Tragstruktur und/oder die Blechwand (3) eingebracht sind, vorzugsweise bündig mit der Flaschenkontaktseite.

7. Reinigungsanlage nach wenigstens einem der vorhergehenden Ansprüche, **dadurch gekennzeichnet, dass** das Schleißblech (4a, 4b, 4c) verschleißfester ist als dem Schleißblech benachbarte Bereiche der Blechwand (3), vorzugsweise aus verschleißfesterem Blechmaterial besteht als diese.

8. Reinigungsanlage nach wenigstens einem der Ansprüche 1 bis 6, **dadurch gekennzeichnet, dass** das Schleißblech (4a, 4b, 4c) eine verschleißfestere Flaschenkontaktseite aufweist als dem Schleißblech benachbarte Bereiche der Blechwand (3).

9. Reinigungsanlage nach wenigstens einem der vorhergehenden Ansprüche, **dadurch gekennzeichnet, dass** der Verschleißbereich (V) der Blechwand (3) in einer kuppen- oder senkenförmigen, bogenförmigen Flaschenumlenkzone (U) des Gehäuses (2) eine den Flaschen zugewandte konvex oder konkav gekrümmte Flaschenkontaktseite für Flaschenböden aufweist, und dass das jeweilige Schleißblech (4a, 4b, 4c) ein mit der passenden Krümmung gebogener Blechstreifen (7) ist.

10. Reinigungsanlage nach wenigstens einem der vorhergehenden Ansprüche, **dadurch gekennzeichnet, dass** das Schleißblech (4a, 4b, 4c) in einem zumindest im Wesentlichen ebenen Verschleißbereich (V) des Flaschentransportwegs angeordnet ist.

11. Reinigungsanlage nach Anspruch 9, **dadurch gekennzeichnet, dass** sich die kuppen- oder senkenförmige Flaschenumlenkzone (U) quer zur Transportrichtung (T) in Querreihen geförderter Flaschen (F) erstreckt, und dass im Verschleißbereich (V) mehrere gleich breite Schleißbleche (4a, 4b, 4c) quer zur Transportrichtung (T) mit gleichen oder ungleichen Längen quer zur Transportrichtung (T) hintereinander und einzeln austauschbar angeordnet sind.

12. Reinigungsanlage nach wenigstens einem der vorhergehenden Ansprüche, **dadurch gekennzeichnet, dass** in Transportrichtung (T) vorne- und/oder hintenliegende Schleißblechränder (8) abgeschrägt sind.

13. Reinigungsanlage nach wenigstens einem der vorhergehenden Ansprüche, **dadurch gekennzeichnet, dass** die Flaschen (F) in jeder Querreihe mit Lücken (12) voneinander beabstandet entlang gegebener Flaschenpfade gefördert werden, und dass Schrauben (5) oder Verriegelungen zum Fixieren des Schleißblechs (4a, 4b, 4c) auf die Lücken (12) zwischen den Flaschen (F) ausgerichtet sind.

## Claims

1. Cleaning assembly (R) for bottles (F), in particular glass and/or plastic bottles, comprising a housing (2) within which at least one transport element (1) being provided with a bottle carrier (H) conveys the bottles (F) through different assembly zones, wherein as a boundary of the bottle transport path within the housing (2) at least one sheet metal wall (3) is provided which can be contacted at a bottle contact side by bottles in at least one locally limited wear region (V) along the bottle transport path, and wherein at least one wear sheet metal plate (4a, 4b, 4c) is provided in the wear region (V) which wear sheet metal plate defines the bottle contact side of the sheet metal wall (3) in the wear region (V), **characterised in that** the sheet metal wall (3) comprises either a local depression (11) adapted to the thickness of the wear sheet metal plate or a cut-out which is framed at the lower side, respectively for the flush insertion of at least one exchangeably arranged wear sheet metal plate (4a, 4b, 4c).

2. Cleaning assembly according to claim 1, **characterised in that** the wear sheet metal plate (4a, 4b, 4c) is exchangeably fixed by screws (5) in the wear region (V).

3. Cleaning assembly according to claim 1, **characterised in that** in the wear region (V) the wear sheet metal plate (4a, 4b, 4c) is latched in and/or is secured by releasable fixations.

4. Cleaning assembly according to claim 1, **characterised in that** in the wear region (V) several wear sheet metal plates (4a, 4b, 4c) are arranged side by side for being exchanged one by one, preferably arranged with blunt joints or with intermediate distances e.g. beside bottle paths.

5. Cleaning assembly according to claim 1, **characterised in that** the wear sheet metal plate (4a, 4b, 4c) is a sheet metal strip (7) having a rectangular or square outer contour, and is provided along the outer contour with anchoring locations, preferably bores or threaded bores or counterforts, for screws (5) or fixations.

6. Cleaning assembly according to claim 5, **characterised in that** the screws (5) or fixations are inserted from the bottle contact side and/or from the side opposite to the bottle contact side into the wear sheet metal plate (4a, 4b, 4c) and into a carrying structure and/or the sheet metal wall respectively, which is situated behind the wear sheet metal plate, preferably flush with the bottle contact side.

7. Cleaning assembly according to at least one of the preceding claims, **characterised in that** the wear sheet metal plate (4a, 4b, 4c) is more wear resistant than portions of the sheet metal wall (3) which are adjacent to the sheet metal plate, preferably consisting of a sheet metal material having higher wear resistance than the sheet metal wall (3).

8. Cleaning assembly according to at least one of claims 1 to 6, **characterised in that** the wear sheet metal plate (4a, 4b, 4c) has a bottle contact side which is more wear resistant than portions of the sheet metal wall adjacent to the wear sheet metal plate.

9. Cleaning assembly according to at least one of the preceding claims, **characterised in that** the wear region (V) of the sheet metal wall (3) is arranged in a hill-shaped or valley-shaped, arcuate bottle deflection zone (U) of the housing (2) and has a bottle contact side for bottle bottoms which facing to the bottles is convexly or concavely curved, and that the respective wear sheet metal plate (4a, 4b, 4c) is a sheet metal strip (7) bent with a curvature fitting the bottle contact side.

10. Cleaning assembly according to at least one of the preceding claims, **characterised in that** the square sheet metal plate (4a, 4b, 4c) is arranged in a wear region (V) of the bottle transport path which wear region (V) is at least substantially planar.

11. Cleaning assembly according to claim 9, **characterised in that** the hill-shaped or valley-shaped bottle deflection zone (U) extends crosswise to the transport direction (T) of the bottles (F) which are conveyed in lateral arrays, and that in the wear region (V) several equally wide wear sheet metal plates (4a, 4b, 4c) are arranged transversely to the transport direction (T) with equal or different lengths crosswise the transport direction (T1) one behind the other and exchangeably one by one.

12. Cleaning assembly according to at least one of the preceding claims, **characterised in that** wear sheet metal edges (8) situated in transport direction (T) in the front and/or the rear are chamfered.

13. Cleaning assembly according to at least one of the preceding claims, **characterised in that** in each lateral array the bottles (F) are spaced apart with gaps (12) and are conveyed along given bottle paths, and that screws (5) or fixations for securing the wear sheet metal plate (4a, 4b, 4c) are aligned with the gaps (12) in-between the bottles (F).

## Revendications

1. Installation de nettoyage (R) pour bouteilles (F), notamment des bouteilles en verre et/ou en matière plastique, comprenant un carter (2), dans lequel au moins un élément de transport (1), qui présente un support de bouteilles (H), transporte les bouteilles (F) à travers différentes zones de l'installation, installation de nettoyage
dans laquelle il est prévu dans le carter (2), en tant que délimitation du parcours de transport de bouteilles, au moins une paroi de tôle (3), qui, sur un côté de contact de bouteilles, peut entrer en contact avec les bouteilles au moins dans une zone d'usure (V) limitée localement le long du parcours de transport des bouteilles, et
dans laquelle il est prévu dans la zone d'usure (V), au moins une tôle d'usure (4a, 4b, 4c), qui, dans la zone d'usure (V), définit le côté de contact avec les bouteilles, de la paroi de tôle (3),
**caractérisée en ce que** la paroi de tôle (3) présente une empreinte en creux locale (11) adaptée à l'épaisseur de la tôle d'usure, ou une découpe encadrée sur le côté inférieur, respectivement destinées à l'insertion d'au moins une tôle d'usure (4a, 4b, 4c) agencée de manière interchangeable et arrivant au ras de la surface environnante.

2. Installation de nettoyage selon la revendication 1, **caractérisée en ce que** la tôle d'usure (4a, 4b, 4c) est fixée de manière interchangeable dans la zone d'usure (V), au moyen de vis (5).

3. Installation de nettoyage selon la revendication 1, **caractérisée en ce que** la tôle d'usure (4a, 4b, 4c) est enclenchée et/ou fixée à l'aide d'éléments de verrouillage amovibles dans la zone d'usure (V).

4. Installation de nettoyage selon la revendication 1, **caractérisée en ce que** dans la zone d'usure (V) sont prévues plusieurs tôles d'usure (4a, 4b, 4c) pouvant être échangées individuellement, les tôles d'usure étant agencées côte à côte, de préférence bout à bout de manière mutuellement contiguë, ou avec des espacements intermédiaires placés par exemple à côté de voies de cheminement de bouteilles.

5. Installation de nettoyage selon la revendication 1, **caractérisée en ce que** la tôle d'usure (4a, 4b, 4c) est une bande de tôle (7) avec un tracé extérieur rectangulaire ou carré, et présente le long du tracé extérieur, des zones d'ancrage, de préférence des perçages ou des perçages taraudés ou encore des butées de support, pour des vis (5) ou des éléments de verrouillage.

6. Installation de nettoyage selon la revendication 5, **caractérisée en ce que** les vis (5) ou les éléments de verrouillage sont introduits, à partir du côté de contact avec les bouteilles et/ou à partir du côté opposé au côté de contact avec les bouteilles, dans la tôle d'usure (4a, 4b, 4c) et une structure porteuse située derrière et/ou la paroi de tôle (3), de préférence en arrivant au ras du côté de contact avec les bouteilles.

7. Installation de nettoyage selon l'une au moins des revendications précédentes, **caractérisée en ce que** la tôle d'usure (4a, 4b, 4c) est plus résistante à l'usure que des zones de la paroi de tôle (3) voisines de la tôle d'usure, et est de préférence réalisée en un matériau de tôle plus résistant à l'usure que ces dernières.

8. Installation de nettoyage selon l'une au moins des revendications 1 à 6, **caractérisée en ce que** la tôle d'usure (4a, 4b, 4c) présente un côté de contact avec les bouteilles plus résistant à l'usure que des zones de la paroi de tôle (3) voisines de la tôle d'usure.

9. Installation de nettoyage selon l'une au moins des revendications précédentes, **caractérisée en ce que** la zone d'usure (V) de la paroi de tôle (3) présente, dans une zone de déviation de bouteille (U) courbe du carter (2), en forme de dôme ou de dépression, un côté de contact pour des fonds de bouteilles, dirigé vers les bouteilles et de courbure convexe ou concave, et **en ce que** la tôle d'usure (4a, 4b, 4c) respective est une bande de tôle (7) cintrée avec la courbure adaptée.

10. Installation de nettoyage selon l'une au moins des revendications précédentes, **caractérisée en ce que** la tôle d'usure (4a, 4b, 4c) est agencée dans une zone d'usure (V) du parcours de transport de bouteilles, au moins sensiblement plane.

11. Installation de nettoyage selon la revendication 9, **caractérisée en ce que** la zone de déviation de bouteille (U) en forme de dôme ou de dépression s'étend transversalement à la direction de transport (T) de bouteilles (F) transportées en rangées transversales, et **en ce que** dans la zone d'usure (V) sont agencées les unes derrière les autres transversalement à la direction de transport (T), de manière individuellement interchangeables, plusieurs tôles d'usure (4a, 4b, 4c) de même largeur et de longueur identique ou différente transversalement à la direction de transport (T).

12. Installation de nettoyage selon l'une au moins des revendications précédentes, **caractérisée en ce que** des bords de tôle d'usure (8), situés à l'avant et/ou à l'arrière dans la direction de transport (T), sont biseautés.

13. Installation de nettoyage selon l'une au moins des revendications précédentes, **caractérisée en ce que** les bouteilles (F) sont transportées dans chaque rangée transversale, en étant mutuellement espacées par des interstices (12), le long de voies de cheminement bouteilles données, et **en ce que** des vis (5) ou des éléments de verrouillage pour la fixation de la tôle d'usure (4a, 4b, 4c), sont alignés sur les interstices (12) entre les bouteilles (F).
